# FASCICULE DE BREVET EUROPEEN

(11) **EP 0 629 882 B1**
(45) Date de publication et mention de la délivrance du brevet: **10.12.1997**
(21) Numéro de dépôt: 94401332.5
(22) Date de dépôt: 14.06.1994
(51) Int. Cl.: G01S 17/88, G01S 7/48

(54) **Lidar haute cadence à source laser basse cadence**
Lidar mit hoher Wiederholfrequenz mit einem Laser mit niedriger Wiederholfrequenz
Lidar with a high pulse repetition rate using a laser source of low pulse repetition rate

(30) Priorité: 18.06.1993 FR 9307390
(43) Date de publication de la demande: 21.12.1994
(73) Titulaire: THOMSON-CSF, 75008 Paris (FR)
(72) Inventeur: Grossmann, Benoist, F-92402 Courbevoie Cedex (FR); Defour, Martin, F-92402 Courbevoie Cedex (FR); Sultan, Roger, F-92402 Courbevoie Cedex (FR)
(74) Mandataire: Lincot, Georges

(56) Documents cités:
- EP-A- 0 292 353
- EP-A- 0 464 263
- WO-A-92/04643
- US-A- 4 068 124
- US-A- 4 270 862
- US-A- 4 572 662
- US-A- 4 902 126

## Description

L'invention se rapporte au domaine de la détection active à source laser, destinée plus particulièrement à la détection d'obstacles, notamment d'obstacles constitués d'objets filiformes tels que des câbles à haute tension. L'invention s'applique en particulier à la détection de tels obstacles à bord d'hélicoptères.

La présence de câbles ou d'objets filiformes rend le pilotage d'hélicoptère très délicat à basse altitude. Ceci est particulièrement vrai en période nocturne, où les moyens de vision classiques du type caméra infrarouge ou intensificateur de lumière ne permettent pas la détection de tels obstacles.

La détection par onde millimétrique n'est pas adaptée pour résoudre ce type de problème. En effet les radars présentent l'inconvénient majeur d'avoir une sensibilité réduite lorsque l'angle d'incidence entre l'obstacle et la ligne de visée est importante. Cette limitation est due au domaine de longueur d'onde utilisées, la réflexion spéculaire étant prépondérante pour des longueurs millimétriques,. Il en résulte alors une absence de cônes de diffusion latéraux.

En revanche le domaine spectral infrarouge se prête bien à la détection de câbles. En effet, la réflexion diffuse des ondes de ce domaine permet d'obtenir des échos aux incidences angulaires élevées. C'est ainsi que les lidars (initiales de "Light Detection and Ranging" en terminologie anglosaxonne) se sont développés. Ils fonctionnent schématiquement selon le principe du radar, mais utilisent comme source un laser à impulsions très brèves (de l'ordre d'une dizaine de nanosecondes).

Cependant, il est impératif de disposer de sources laser ayant des cadences de répétition et des points d'échantillonnages suffisamment élevés (typiquement supérieur à 30 kHz) pour obtenir des champs d'observation et des cadences d'images suffisamment importants. Obtenir un laser pouvant travailler à cette cadence de répétition constitue une première source de difficultés.

Par ailleurs, il est aisé de montrer qu'il existe une cadence maximale de répétition des impulsions laser, au-delà de laquelle apparaît une ambiguïté de distance. Cette cadence est appelée ci-après cadence maximale d'ambiguïté. L'ambiguïté résulte de la possibilité d'émettre une impulsion laser alors que la précédente n'est pas encore détectée par rétrodiffusion. Or, la puissance rétrodiffusée par un câble est inversement proportionnelle à 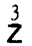 , Z étant la distance de l'obstacle, alors qu'elle est inversement proportionnelle à 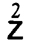 par rétrodiffusion sur un obstacle de grande dimension (arbre, sol). Ainsi, dans le cas de la détection de câbles, la cadence maximale d'ambiguïté est directement liée à la distance pour laquelle un écho provenant du fond (par exemple du sol ou d'un arbre) est égale en puissance rétrodiffusée à un écho provenant d'un câble situé à une distance de référence. Par exemple, en se fixant une albédo de câble de 1 % (dans le cas le plus défavorable d'un câble gainé noir sous une incidence de 60°), une divergence de faisceaux laser de 3 mrad, une portée de 300 mètres et une albédo du fond environnant de 40 %, il est aisé de montrer que la cadence maximale d'ambiguïté est de 15 kHz. Pour d'autres types de câbles (par exemple câbles en aluminium) une albédo de 10 % se traduit par une cadence maximale de 50 kHz.

Ainsi, la détection de certains types de câbles impose une cadence maximale qui peut limiter sensiblement la dimension du champ de surveillance, la densité de points accessibles ou la cadence image.

La plupart des systèmes de détection de câbles connus s'intéresse aux câbles (par exemple en aluminium) pour lesquels la cadence maximale d'ambiguïté (de l'ordre de 50 kHz) ne constitue pas une limitation des performances du système (champ, cadence image, résolution et portée).

On peut citer par exemple le système dit "OASYS" pour "Obstacles Avoidance Systems" décrit dans l'article de B. NORDWALL intitulé "Army System to Detect Wires, Aviation Week & Space Technology, 22 Janvier 1990, pages 77-81. Ce système utilise une diode laser émettant à la cadence de 80 kHz. Indépendamment de cette valeur nettement supérieure à celle de la cadence maximale d'ambiguïté pour des câbles gainés en noir, la faible valeur de la puissance de la diode laser (de l'ordre de 100 watts) ne permet pas de toutes façons la détection de ce type de câbles.

Dans un article de Larry R. MARSHALL et al, . intitulé "Diode pumped eye-safe laser source exceeding 1 % officiency, Optics letters, volume 16, n° 21, Novembre 1991, p. 1881-1882, il est décrit l'utilisation d'une source laser à la longueur d'onde de sécurité oculaire de 1,54 micromètres. Cette longueur d'onde est obtenue à l'aide d'un laser YAG dopé au Nd et couplé à un Oscillateur Paramétrique Optique (OPO). La cadence de répétition est limitée par celle du laser YAG (de l'ordre de 10 kHz ). Mais la forte puissance de la source laser (de l'ordre de 25 kW) ainsi obtenue, permet la détection de tous les types de câbles sans effet d'ambiguïté de distance. Cependant la faible cadence laser limite considérablement les performances du système (champ d'analyse ou cadence image très insuffisants).

Un lidar selon le préambule de la revendication 1 est décrit dans le brevet US-A-4 572 662.

L'invention vise, au contraire, à permettre la détection de tous types d'obstacles, en particulier de câbles gainés de noir, tout en garantissant des performances suffisantes. Pour atteindre ce but, l'invention est basée sur la mise en oeuvre d'une augmentation connexe de la cadence de répétition d'un laser par multiplexage optique du faisceau émis. La source laser est choisie pour que la puissance crête émise par impulsion soit suffisante pour que la puissance reçue, reste supérieure à la puissance minimale de détection.

Plus précisément, l'invention a pour objet un lidar haute cadence à source laser basse cadence, comportant des moyens d'émission d'un faisceau d'énergie lumineuse suivant un axe de visée, des moyens de balayage du faisceau d'énergie lumineuse dans un champ d'observation pour la détection, dans ce champ, d'obstacles renvoyant en écho au moins une partie de l'énergie vers les moyens d'émission, et des moyens de réception de l'énergie ainsi renvoyée, le lidar étant caractérisé en ce que les moyens de balayage sont communs aux moyens d'émission et de réception, en ce qu'il comporte des moyens de séparation de l'énergie émise et de l'énergie reçue, des moyens de multiplexage optique du faisceau d'énergie lumineuse pour créer n voies lumineuses d'émission et de réception couplées à la réception, et des moyens de détection de l'énergie lumineuse renvoyée provenant de chacune des voies d'émission lumineuse, les moyens de détection délivrant n signaux à un circuit de traitement multipliant ainsi la cadence de répétition d'image par un facteur n.

Selon une première forme de réalisation, les moyens de multiplexage optique comportent un système optique afocal à lentilles cylindriques pour former un faisceau laser présentant une divergence principale selon un plan et les moyens d'identification comportent des moyens optiques de séparation par polarisation du faisceau émis et du faisceau renvoyé couplé à une barrette de n détecteurs jointifs.

Selon une autre forme de réalisation, le faisceau laser émis est divisé en n faisceaux, en utilisant par exemple des lames séparatrices. Les faisceaux sont alors dirigés selon des directions différentes, puis sont détectés, après renvoi par un obstacle, sur n détecteurs distincts, chacun de ces détecteurs étant harmonisé à un faisceau d'émission par localisation spatiale.

Avantageusement, la source laser utilisée est un laser Nd:YAG associé à un oscillateur paramétrique optique pour délivrer une puissance de l'ordre de 25 Kwatts à la longueur d'onde de 1,54 µm. Cette longueur d'onde présente l'avantage de répondre aux impératifs de sécurité oculaire.

D'autres avantages et caractéristiques apparaîtront à la lecture de la description qui suit, en regard des figures annexées qui représentent respectivement :
- la figure 1, un schéma du lidar selon l'invention ;
- la figure 2, un système optique afocal d'une première forme de réalisation du lidar selon l'invention ;
- la figure 3, une vue du faisceau à divergence asymétrique obtenue à l'aide du système optique afocal;
- la figure 4, un balayage de champ réalisé par déflexion du faisceau divergent selon la première forme de réalisation de l'invention ;
- la figure 5, un multiplieur optique à lames séparatrices selon une deuxième forme de réalisation de l'invention.

Sans limiter la portée de l'invention, il sera considéré dans ce qui suit que l'obstacle à détecter est un câble du type câble de transport d'énergie électrique à haute tension, et que le lidar décrit est destiné à équiper un hélicoptère.

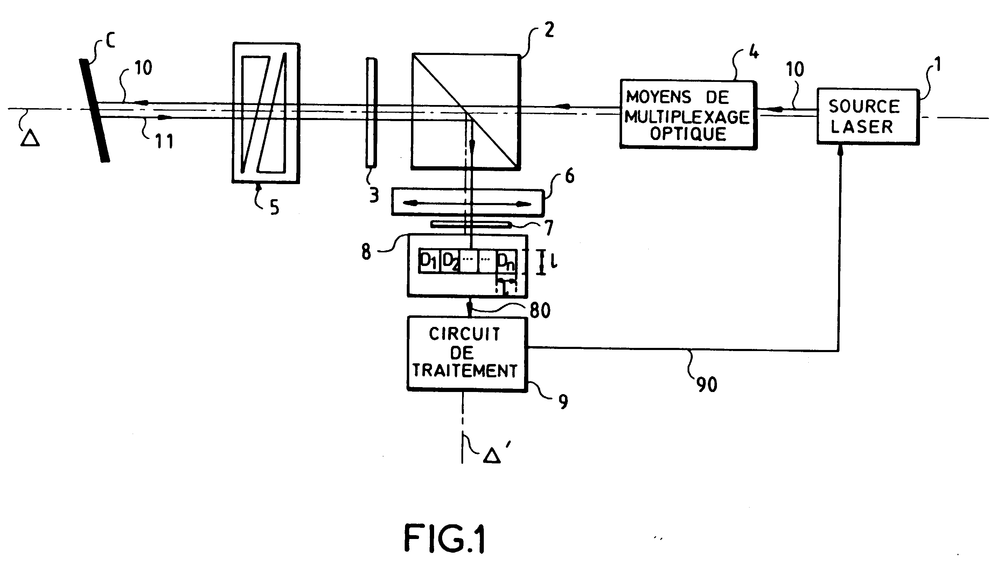

La figure 1 illustre schématiquement un lidar selon l'invention.

Comme indiqué précédemment, la source laser 1 utilisée par exemple est un laser YAG dopé Nd3+, couplé à un OPO (oscillateur paramétrique optique). La puissance impulsionnelle utilisée est de l'ordre de 25 kW à la longueur d'onde de 1,54 µm. Pour obtenir une telle valeur, la puissance de pompe du laser YAG est d'au moins 120 Kwatts à la longueur d'onde de 1,06 µm. Le faisceau lumineux émis 10, suivant un axe de visée Δ, traverse des moyens de multiplexage optique 4 constitués, selon un premier mode de réalisation par le faisceau 10 est ensuite défléchi suivant une figure de balayage prédéterminée grâce à un système de déflexion 5.

Ce système de déflexion peut être un diasporamètre, tel que celui décrit dans l'ouvrage de G. BROUSSAUD "Optoélectronique" éditeur MASSON et Cie, 1974, p. 174-175. Un tel élément comporte deux prismes tournant en contre-rotation selon des vitesses différentes. La cadence de rafraîchissement de l'image est déterminée par la vitesse de rotation du prisme le plus lent. D'autres systèmes de balayage peuvent être utilisés, par exemple des miroirs de type galvanométrique.

Afin de n'utiliser qu'un seul dispositif de balayage à l'émission et à la réception, il est avantageusement mis en place une optique d'émission-réception commune, avec séparation sur la polarisation de la lumière. La séparation est obtenue par exemple à l'aide d'un cube séparateur de polarisation 2 et d'une lame quart d'onde 3. En émission , le faisceau 10 émis par la source 1 est polarisé linéairement (par exemple verticalement) et transmis par le cube de séparation 2. Il traverse ensuite la lame quart d'onde 3 qui transforme sa polarisation linéaire en une polarisation circulaire (par exemple circulaire droite). Après réflexion ou rétrodiffusion sur un obstacle, par exemple un câble C sur la figure 1, le faisceau rétroréfléchi 11 a une polarisation inverse (circulaire gauche dans l'exemple utilisé). Puis le faisceau rétroréfléchi 11 traverse la lame quart d'onde 3 qui rend sa polarisation de nouveau linéaire (dans l'exemple horizontal). Il est alors réfléchi par le cube 2 suivant un axe Δ' orthogonal à l'axe Δ. Le faisceau 11 ainsi réfléchi est focalisé par des moyens optiques de focalisation 6 sur des moyens de détection; le faisceau conservé traverse avantageusement un filtre interférentiel 7, ce filtre ne transmet qu'une bande de longueur d'onde centrée autour de la longueur d'onde d'émission de la source laser 1.

Les moyens de détection sont constitués selon le premier mode de réalisation par une barrette de détection, par exemple du type Ga In As, comportant des détecteurs D1 à Dn sensiblement jointifs de dimension l x h. Les moyens de détection 8 délivrent alors un signal électrique 80 exploitable par un circuit de traitement de signal 9. Ces moyens de traitement fournissent un signal de commande 90 de l'émission laser à la source 1.

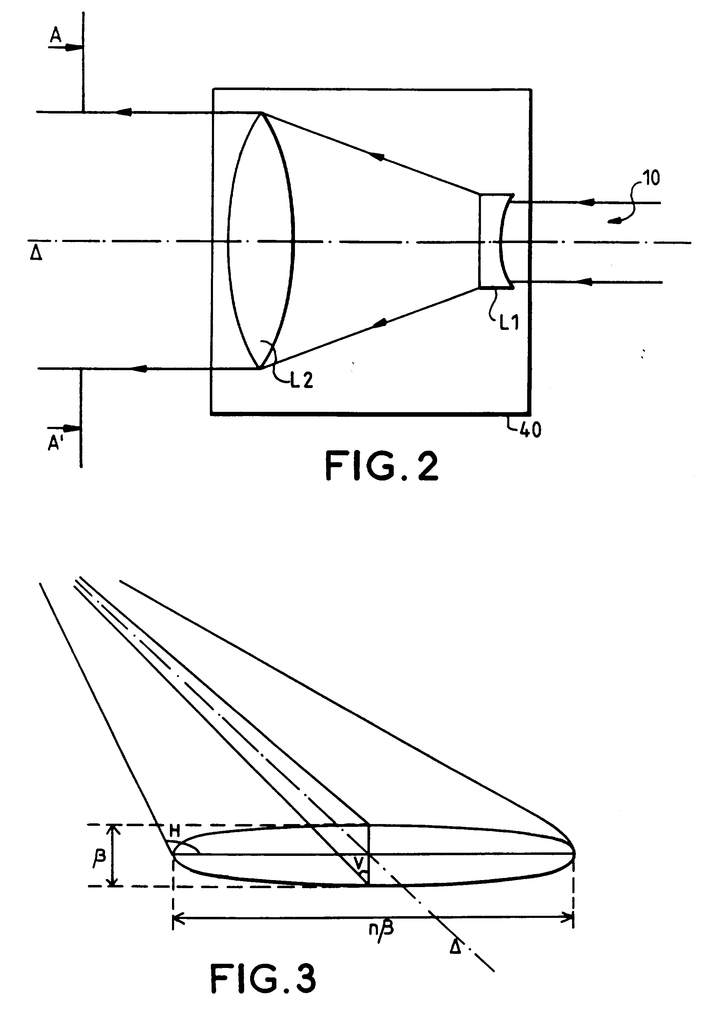

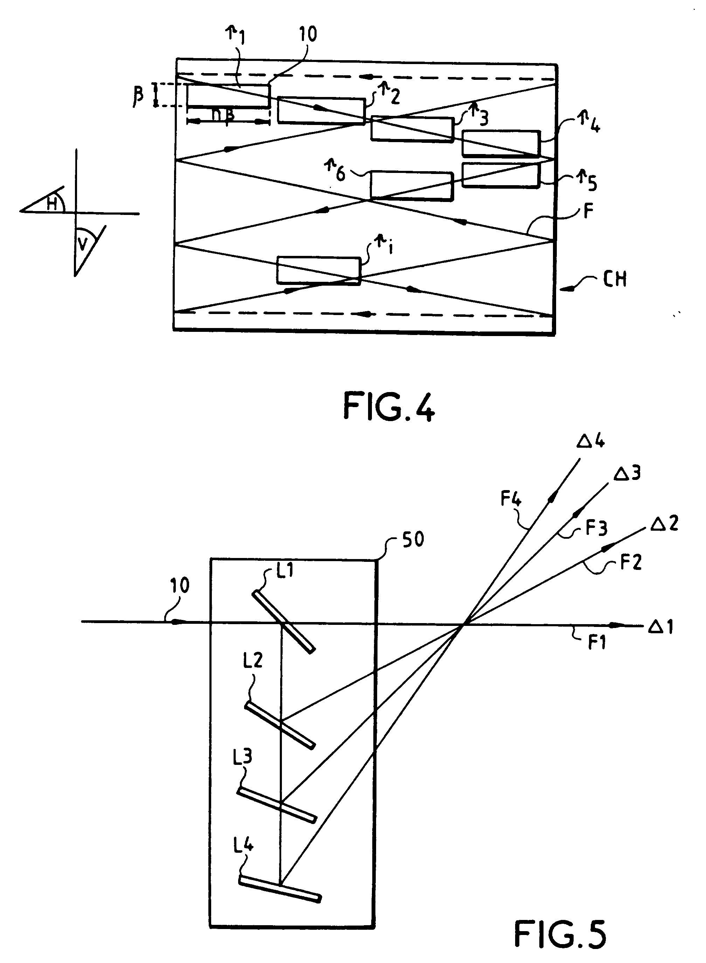

L'obtention d'un tel faisceau à partir d'un faisceau de divergence isotrope présentant une divergence principale résulte de la mise en oeuvre d' un système optique afocal du type de celui illustré, à titre d'exemple non limitatif, par la figure 2. Le système afocal (40) représenté comporte deux lentilles cylindriques L1 et L2, dont l'une, L1 est divergente dans un plan donné, par exemple celui du plan de la figure 2 dans l'exemple illustré. A la sortie du système optique afocal 20, le faisceau laser présente des divergences différentes β et nβ dans 2 plans orthogonaux, par exemple un plan vertical V et un plan horizontal, telles qu'elles apparaissent sur la figure 3 qui est une coupe selon AA' de la figure 2. Le rapport de divergence est égal n. Ce faisceau à divergence asymétrique, qui constitue n voies d'émission lumineuse de divergence β x β, est balayé dans un champ d'observation donné grâce au système de déflexion 5. Ainsi, le champ observé CH, tel qu'illustré par la figure 4, est balayé par le faisceau 10 occupant des positions successives présentant les divergences principales β et nβ selon, respectivement, le plan vertical et le plan horizontal, β pouvant être égal à 3 mrad et n égal à 8. La figure de balayage F parcourue par le faisceau 10 présente par exemple une forme de type en "zigzag". Le champ d'observation balayé peut être important, égal par exemple à 30 x 30°.

Le faisceau rétroréfléchi 11 se présente dans un champ de vue β x nβ identique à celui du faisceau émis 10, ce faisceau 11 étant focalisé sur la barrette 8. Les dimensions de chaque détecteur de la barrette est telle que le champ de vue élémentaire associé est égal à β x β. Dans ces conditions, il suffit de prendre un nombre de détecteurs égal au rapport n de divergence pour que β représente la résolution angulaire du système de détection du lidar. Ainsi la discrimination angulaire se fait selon ce premier mode de réalisation à la réception avec une résolution élevée.

La détection proprement dite d'un obstacle par le circuit de traitement 9 peut s'effectuer simplement. De façon classique, le temps s'écoulant entre l'émission et la réception d'une impulsion est mesurée à l'aide de ce circuit, et la télémétrie est calculée en conséquence. Il est possible, en utilisant un seuil, de n'extraire que les signaux pour lesquels des (critères de forme d'objets aériens et d'épaisseur) des objets détectés est satisfait. Des échos aériens ainsi détectés peuvent ensuite être incrustés sur une caméra, par exemple de type CCD, ou sur tous moyens de visualisation appropriée (lunette de vision de nuit, "FLIR" ou écran cathodique). Il est possible, pour certains types de visualisation d'afficher directement ou en incrustation la figure de balayage obtenue à l'aide des moyens de déflexion. Les détections successives d'un obstacle de type câble apparaissent alors sous forme de segments de courbes sur l'image de visualisation.

Un autre mode de réalisation peut être mis en oeuvre. Il consiste à réaliser une discrimination angulaire non pas à la réception mais déjà à l'émission. Pour ce faire, les moyens de multiplexage optique 4 de la figure 1, sont constitués par un multiplexeur optique tel que celui illustré à la figure 5. Un tel multiplexeur 50 divise le faisceau laser 10 en n faisceaux F1, F2. Fn, à l'aide de n lames séparatrices L1 à Ln. Du fait d'une orientation adaptée des lames L1 à Ln, les faisceaux F1 à Fn sont dirigés selon n directions distinctes S1 à Sn, afin de créer n voies d'émission lumineuse. Chacun des n faisceaux F1 à Fn transporte la même puissance crête P0/n, P0 étant la puissance crête par impulsion délivrée par la source laser. A titre d'exemple, sur la figure 4, le multiplexeur 50 comporte quatre lames séparatrices L1 à L4 orientées de manière à réfléchir partiellement un faisceau incident selon les directions S1 à S4. Chaque lame possède un coefficient de réflexion tel que la puissance lumineuse transmise soit égale au quart de la puissance reçue. Ainsi les coefficients de réflexion sont égaux à 75 %, 33 %, 50 %, 100 %, pour, respectivement, les lames L1, L2, L3, et L4.

Chaque faisceau Fi (i variant de 1 à n) balaye une portion du champ d'observation selon une figure déterminée par les moyens de déflexion 5. Après rétroréflexion sur un obstacle, les faisceaux conservent une même répartition des directions de propagation, et sont réfléchis par le cube de séparation 2 puis focalisés sur n détecteurs disjoints à l'aide de n lentilles constituant les moyens de focalisation 6. L'emplacement de chacun des détecteurs dans le plan de focalisation est choisi en conséquence. La dimension l x l de chacun de ces détecteurs est telle qu'elle correspond au champ de vue élémentaire de chaque faisceau F1 à Fn de divergence égale à β x β. Chacun des n détecteurs délivre ensuite un signal au circuit de traitement 9.

Les moyens diviseurs de faisceau du multiplexeur optique peuvent également être constitués par n optiques diffractives constituant un réseau binaire de phase.

Pratiquement, la puissance disponible fournie par la source laser à la longueur d'onde 1,54 µm sera de l'ordre 30 Kw à la cadence de 5 Khz puisque, pour des raisons de stabilité, la puissance de pompe du laser YAG doit être largement supérieure au seuil d'apparition des impulsions (40 Kwatts), le taux de conversion étant de l'ordre 30 %. La cadence de répétition est en fait limitée par celle du laser YAG à 1,06 µm, qui est de l'ordre de 5 Khz. En utilisant cette source laser selon l'invention avec, à la détection, 6 détecteurs (n = 6), la puissance équivalente par détecteur est de 5 Kw. Cette valeur permet par exemple d'obtenir une portée de 300 mètres sur des câbles gainés noirs sous une incidence de 60°, en utilisant une dimension de pupille de réception de l'ordre de 50 mm et en balayant un champ de 30 x 30°.

On dispose ainsi d'une cadence de répétition laser équivalente élevée (30 kHz), ce qui permet d'obtenir des cadences images de 5 Hz pour des taux de remplissage d'image de 20 %.

L'invention n'est pas limitée aux exemples de réalisation décrits et représentés. Par exemple, les figures de balayage élaborés par le système de déflection peut être de type télévision, de type en rosace ou de type épicycloïdal.

D'autre part, le lidar selon l'invention peut être utilisé dans tout système où l'on souhaite augmenter le nombre de points images tout en travaillant avec un laser à cadence fixe, par exemple dans les télémètres autopointés ou dans les brouilleurs laser de CMO (contremesure optique).

## Revendications

1. Lidar comportant des moyens d'émission (1) d'un faisceau d'énergie lumineuse (10) suivant un axe de visée, des moyens de balayage (5) du faisceau d'énergie lumineuse (10) dans un champ d'observation (CH) pour la détection, dans ce champ, d'obstacles renvoyant en écho au moins une partie de l'énergie vers les moyens d'émission, et des moyens de réception (6 à 8) de l'énergie ainsi renvoyée, les moyens de balayage (5) étant communs aux moyens d'émission (1) et de réception (6 à 8), des moyens de séparation (2, 3) de l'énergie émise et de l'énergie reçue, un circuit de traitement (9), le lidar étant caractérisé en ce qu'il comporte des moyens de multiplexage optique (4) du faisceau d'énergie lumineuse (10) pour créer n voies lumineuses d'émission et de réception couplées à la réception, et des moyens de détection (8) de l'énergie lumineuse renvoyée provenant de chacune des voies d'émission lumineuse, les moyens de détection (8) délivrant n signaux au circuit de traitement (9) multipliant ainsi la cadence de répétition d'image par un facteur n et étant ainsi un lidar haute cadence à source laser basse cadence.

2. Lidar selon la revendication 1, caractérisé en ce que les moyens de séparation comportent une lame quart d'onde (3) et un cube (2) séparateur de polarisation disposés, à l'émission, entre les moyens d'émission (1) et les moyens de balayage (5) et, à la réception, entre les moyens de balayage (5) et les moyens de réception (6 à 8).

3. Lidar selon l'une des revendications précédentes, caractérisé en ce que les moyens de multiplexage optique (4) comportent un système afocal (40) comprenant au moins une lentille cylindrique (L1) divergente selon un plan (H) donné pour que le faisceau émis (10) présente une divergence principale nβ dans ce plan (H) et une divergence β dans un plan orthogonal (V) au plan donné (H) pour constituer n voies lumineuses de divergence β x β, et en ce que les moyens de réception (6 à 8) comportent une lentille de focalisation (6) couplée à une barrette de détection (8) comportant n détecteurs (D1 à Dn), chaque détecteur ayant des dimensions (lxl) correspondant à la divergence (β x β) de chaque voie lumineuse transportant l'énergie lumineuse détectée.

4. Lidar selon l'une des revendications 1 ou 2, caractérisé en ce que les moyens de multiplexage optique (4) comportent des moyens diviseurs (L1 à Ln) du faisceau laser émis (10) en n faisceaux (F1 à Fn) dans n directions distinctes (S1 à Sn) pour former n voies lumineuses de divergence (β x β) de chaque voie lumineuse.

5. Lidar selon la revendication 4, caractérisé en ce que les moyens diviseurs comportent des lames séparatrices (L1 à Ln), chaque lame ayant un coefficient de réflexion choisi pour transmettre une même proportion de puissance crête (Po/n) et ayant une orientation choisie pour que les faisceaux émis (F1 à Fn) soient dirigés vers les n directions distinctes (S1 à Sn).

6. Lidar selon l'une des revendications précédentes, caractérisé en ce que les moyens de balayage (5) comportent deux diasporamètres tournant en contre-rotation pour former une figure de balayage (F) du champ d'observation (HD).

7. Lidar selon l'une des revendications précédentes, caractérisé en ce que les moyens de réception (6 à 8) comportent un filtre interférentiel (7) pour ne transmettre qu'une bande de longueurs d'onde centrée autour de la longueur d'onde d'émission de la source laser (1).

8. Lidar selon l'une des revendications précédentes, caractérisé en ce que les moyens de réception (6 à 8) délivrent un signal (80) audit circuit, le circuit de traitement (9) effectuant des mesures télémétriques des objets détectés et délivrant un signal à des moyens de visualisation adaptés lorsque des critères de forme sont satisfaits.

9. Lidar selon l'une quelconque des revendications précédentes, caractérisé en ce que les moyens d'émission (1) comportent une source laser unique.

## Patentansprüche

1. Lidar mit Mitteln (1) zum Aussenden eines Lichtenergiestrahls (10) längs einer Zielachse, Mitteln (5) zum Abtasten des Lichtenergiestrahls (10) in einem Beobachtungsfeld (CH) zum Erfassen von Hindernissen in diesem Feld, die als Echo wenigstens einen Teil der Energie zu den Sendemitteln zurücksenden, sowie mit Mitteln (6 bis 8) zum Empfang der so zurückgesendeten Energie, wobei die Abtastmittel (5) den Sendemitteln (1) und den Empfangsmitteln (6 bis 8) gemeinsam sind, Mitteln (2, 3) zum Trennen der ausgesendeten und der empfangenen Energie sowie einer Verarbeitungsschaltung (9), wobei das Lidar dadurch gekennzeichnet ist, daß es optische Multiplexmittel (4) für den Lichtenergiestrahl (10) aufweist, um n Sende- und Empfangslichtpfade zu schaffen, die mit dem Empfang gekoppelt sind, sowie Mittel (8) zum Erfassen der zurückgesendeten Lichtenergie, die von jedem der Lichtemissionspfade stammt, wobei die Erfassungsmittel (8) n Signale an die Verarbeitungsschaltung (9) liefern und so die Bildwiederholfrequenz mit einem Faktor n multiplizieren, und damit ein Lidar mit hoher Wiederholfrequenz mit einer Laserquelle mit niedriger Wiederholfrequenz bilden.

2. Lidar nach Anspruch 1, dadurch gekennzeichnet, daß die Trennmittel ein Lambda-Viertel-Platte (3) und einen Polarisationstrennkubus (2) aufweisen, die beim Senden zwischen den Sendemitteln (1) und den Abtastmitteln (5) und beim Empfang zwischen den Abtastmitteln (5) und den Empfangsmitteln (6 bis 8) angeordnet sind.

3. Lidar nach einem der vorhergehenden Ansprüche, dadurch gekennzeichnet, daß die optischen Multiplexmittel (4) ein brennpunktloses System (40) mit wenigstens einer zylindrischen Linse (L1) aufweisen, die nach einer gegebenen Ebene (H) streut, damit der emittierte Strahl (10) eine Hauptstreuung nβ in dieser Ebene (H) und eine Streuung β in einer zu der gegebenen Ebene (H) senkrechten Ebene (V) aufweist, um n Lichtpfade mit einer Streuung β x β zu bilden, und daß die Empfangsmittel (6 bis 8) eine Fokussierungslinse (6) aufweisen, die mit einer Erfassungsanordnung (8) mit n Detektoren (D1 bis Dn) gekoppelt ist, wobei jeder Detektor Abmessungen (I x I) aufweist, die der Streuung (β x β) jedes Lichtpfades entspricht, der die erfaßte Lichtenergie transportiert.

4. Lidar nach einem der Ansprüche 1 oder 2, dadurch gekennzeichnet, daß die optischen Multiplexmittel (4) Mittel (L1 bis Ln) zum Teilen des ausgesendeten Laserstrahls (10) in n Strahlen (F1 bis Fn) in n verschiedenen Richtungen (S1 bis Sn) aufweisen, um n Lichtpfade mit der Streuung (β x β) von jedem Lichtpfad zu bilden.

5. Lidar nach Anspruch 4, dadurch gekennzeichnet, daß die Teilermittel Trennplatten (L1 bis Ln) aufweisen, wobei jede Platte einen gewählten Reflexionskoeffizienten aufweist, um ein und denselben Anteil der Maximalleistung (Po/n) zu übertragen, und eine gewählte Orientierung aufweist, damit die ausgesendeten Strahlen (F1 bis Fn) in die n verschiedenen Richtungen (S1 bis Sn) gerichtet sind.

6. Lidar nach einem der vorhergehenden Ansprüche, dadurch gekennzeichnet, daß die Abtastmittel (5) zwei Diasporameter aufweisen, die sich in Gegenrotation drehen, um eine Abtastfigur (F) für das Beobachtungsfeld (HD) zu bilden.

7. Lidar nach einem der vorhergehenden Ansprüche, dadurch gekennzeichnet, daß die Empfangsmittel (6 bis 8) ein Interferenzfilter (7) aufweisen, um nur ein Wellenlängenband zu übertragen, das um die Sendewellenlänge der Laserquelle (1) zentriert ist.

8. Lidar nach einem der vorhergehenden Ansprüche, dadurch gekennzeichnet, daß die Empfangsmittel (6 bis 8) an die Schaltung ein Signal (80) liefern, wobei die Verarbeitungseinrichtung (9) telemetrische Messungen der erfaßten Objekte durchführt und ein Signal an geeignete Anzeigemittel abgibt, wenn Formkriterien Genüge getan ist.

9. Lidar nach einem der vorhergehenden Ansprüche, dadurch gekennzeichnet, daß die Sendemittel (1) eine einzige Laserquelle aufweisen.

## Claims

1. Lidar which includes means (1) for emitting a light energy beam (10) along a line of sight, means (5) for scanning the light energy beam (10) in a field of view (CH) for detecting, in this field, obstacles which send back at least some of the energy to the emission means as an echo, and means (6 to 8) for receiving the energy thus sent back, the scanning means (5) being common to the emission (1) and reception (6 to 8) means, means (2, 3) for splitting the emitted energy and the received energy, and a processing circuit (9), the lidar being characterized in that it includes means (4) for optically multiplexing the light energy beam (10) in order to create n emission and reception light channels coupled to the reception, and means (8) for detecting the reflected light energy originating from each of the light emission channels, the detection means (8) delivering n signals to the processing circuit (9), thus multiplying the image repetition rate by a factor n, and thus being a high-rate lidar operating with a low-rate laser source.

2. Lidar according to Claim 1, characterized in that the splitting means comprise a quarter-wave plate (3) and a polarizing splitter cube (2), these being arranged, at emission, between the emission means (1) and the scanning means (5) and, at reception, between the scanning means (5) and the reception means (6 to 8).

3. Lidar according to either of the preceding claims, characterized in that the optical multiplexing means (4) include an afocal system (40) comprising at least one cylindrical lens (L1) divergent in a given plane (H) so that the emitted beam (10) has a principal divergence nβ in this plane (H) and a divergence β in a plane (V) orthogonal to the given plane (H) in order to constitute n light channels with divergence β x β, and in that the reception means (6 to 8) include a focusing lens (6) coupled to a linear detection array (8) consisting of n detectors (D1 to Dn), each detector having dimensions (1 x 1) corresponding to the divergence (β x β) of each light channel carrying the light energy detected.

4. Lidar according to either of Claims 1 and 2, characterized in that the optical multiplexing means (4) consist of means (L1 to Ln) for dividing the emitted laser beam (10) into n beams (F1 to Fn) in n separate directions (S1 to Sn) in order to form n light channels of divergence (β x β) in each light channel.

5. Lidar according to Claim 4, characterized in that the splitting means consist of splitter plates (L1 to Ln), each plate having a reflection coefficient chosen to transmit the same proportion of peak power (Po/n) and having an orientation chosen so that the emitted beams (F1 to Fn) are directed along the n separate directions (S1 to Sn).

6. Lidar according to one of the preceding claims, characterized in that the scanning means (5) consist of two counter-rotating diasporometers in order to form a scan pattern (F) over the field of view (HD).

7. Lidar according to one of the preceding claims, characterized in that the reception means (6 to 8) include an interference filter (7) in order to transmit only a wavelength range centred around the emission wavelength of the laser source (1).

8. Lidar according to one of the preceding claims, characterized in that the reception means (6 to 8) deliver a signal (80) to the said circuit, the processing circuit (9) carrying out rangefinding measurements of the objects detected and delivering a signal to suitable display means when shape criteria are satisfied.

9. Lidar according to any one of the preceding claims, characterized in that the emission means (1) consist of a single laser source.
